(19) Europäisches Patentamt
European Patent Office
Office européen des brevets

(11) **EP 3 916 434 B1**

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **20176772.0**

(22) Anmeldetag: **27.05.2020**

(51) Internationale Patentklassifikation (IPC):
**G01V 3/10** *(2006.01)* **B61L 1/16** *(2006.01)*

(52) Gemeinsame Patentklassifikation (CPC):
**G01V 3/105; B61L 1/162; B61L 1/165; B61L 1/167**

(54) **RADDETEKTOR UND VERFAHREN ZUM DETEKTIEREN EINES SCHIENENGEBUNDENEN RADES**

WHEEL DETECTOR AND METHOD FOR DETECTING A TRACK-BOUND WHEEL

DÉTECTEUR DE ROUE ET PROCÉDÉ DE DÉTECTION D'UNE ROUE SUR RAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.12.2021 Patentblatt 2021/48**

(73) Patentinhaber: **Siemens Mobility GmbH**
**81739 München (DE)**

(72) Erfinder: **Freise, Rainer**
**38124 Braunschweig (DE)**

(74) Vertreter: **Siemens Patent Attorneys**
**Postfach 22 16 34**
**80506 München (DE)**

(56) Entgegenhaltungen:
**DE-A1- 19 809 086          DE-A1-102012 212 939**
**DE-B4-102007 023 475**

**Beschreibung**

Die Erfindung betrifft ein Verfahren zum Detektieren eines schienengebundenen Rades nach Anspruch 1.

Außerdem betrifft die Erfindung einen Raddetektor nach Anspruch 7.

Weiterhin betrifft die Erfindung ein Computerprogrammprodukt nach Anspruch 10 sowie eine Bereitstellungsvorrichtung für dieses Computerprogrammprodukt nach Anspruch 11, wobei das Computerprogrammprodukt mit Programmbefehlen zur Durchführung dieses Verfahrens ausgestattet ist.

In der Gleisfreimeldetechnik sind Raddetektoren bzw. Achszählsensoren, die nach dem Schienen umgreifenden System mit gegenüber liegendem, getrenntem Sender und Empfänger arbeiten, hinlänglich bekannt. Es gibt verschiedene Möglichkeiten, die Störfestigkeit von Raddetektoren zu erhöhen. Eine Möglichkeit ist die direkte Gegenkopplung einer baugleichen Empfangsspule, die so verschaltet ist, dass sich gleichphasige Störfelder, wie sie z.B. durch Schienenstrom auf Arbeitsfrequenz entstehen, voneinander subtrahieren und somit weitestgehend unterdrückt werden. Durch die Baugleichheit der Spulen und die gleiche Positionierung an der Schiene in Bezug auf die Störfeldinduktion ergibt sich eine weitgehende Störfeldunterdrückung. Ein Beispiel hierzu ist in der DE 10 2007 023 475 B4 beschrieben.

Die Aufgabe der Erfindung besteht darin, die Störunempfindlichkeit von induktiv arbeitenden Radsensoren, die mit getrenntem Sender und Empfänger arbeiten, gegenüber induzierten Störspannungen durch äußere magnetischen Störfelder, welche z. B. durch Schienenstrom auf Arbeitsfrequenz erzeugt werden, zu erhöhen und diese Erhöhung der Störunempfindlichkeit unabhängig zu machen von äußeren Parametern wie z. B. Schienentyp, Schienenabnutzung, Fertigungs- und Anbautoleranzen des Sensors oder auch den sich ändernden Bedingungen während einer Radüberfahrt.

Diese Aufgabe wird mit dem eingangs angegebenen Anspruchsgegenstand (Verfahren) erfindungsgemäß dadurch gelöst, dass die Verarbeitung rechnergestützt erfolgt, indem

- ein modifiziertes Empfangssignal und ein modifiziertes Messsignal generiert werden, bei denen innerhalb der gemessenen Bandbreite des Empfangssignals und des Messsignals ein Nutzfrequenzband, in dem das Empfangssignal liegt, unterdrückt ist,
- die Signalstärke des modifizierten Empfangssignals und des modifizierten Messsignals einander angeglichen werden, und aus dem modifizierten Empfangssignal ein angeglichenes Empfangssignal sowie aus dem modifizieren Messsignal ein angeglichenes Messsignal generiert wird (wobei das jeweils angeglichene Signal mit dem zugehörigen modifizierten Signal identisch sein kann, wenn ein Angleichen nicht notwendig ist oder das jeweils andere modifizierte Signal zum Angleichen verändert wird),
- der Störeinfluss in dem angeglichenen Empfangssignal durch Berücksichtigung des angeglichenen Messsignals beseitigt oder zumindest verringert wird.

Das oben genannte Problem der sich ändernden Ergebnisse in Abhängigkeit von der Anbausituation wird mit anderen Worten also gelöst durch eine sich selbständig nachregelnde Störfeldkompensation in Abhängigkeit vom momentanen Zustand des Sensors (Spulen) im Raddetektor bzw. dem Grad einer Störfeldeinkopplung. Dies hat den wesentlichen Vorteil, dass Fertigungstoleranzen, Einbautoleranzen, Störfeldgrößen oder eine verschleißbedingte Drift der Signalerzeugung nicht bekannt sein müssen, da diese während der Messung der Empfangsspannung als Empfangssignal unter Berücksichtigung der gemessenen Messspannung als Messsignal sofort kompensiert werden können.

Eine zusätzliche Sensorspule, die Messspule, wird so dimensioniert und positioniert bzw. ausgerichtet, dass diese möglichst keine Empfangsspannung bzw. Signalüberhöhung bei Radüberfahrt erzeugt, aber durch Schienenströme auf Arbeitsfrequenz induzierte Störspannungen erzeugt. Die Messspule dient der Messung der vom Schienenstrom bzw. der von einer anderen Störquelle ausgehenden Störungen. Die Messspannung (Messsignal) dieser Spule bzw. dieses Schwingkreises wird berücksichtigt, von der Empfangsspannung (Empfangssignal) vorzugsweise subtrahiert bzw. addiert, damit der Störeinfluss in dem angeglichenen Empfangssignal durch Berücksichtigung des angeglichenen Messsignals beseitigt oder zumindest verringert wird, je nach Phasenlage und Ausrichtung der Spulen an der Schiene. Die Phasenlage kann von der Geometrie der Messvorrichtung in der Polung der verwendeten Spulen abhängen. Außerdem kann diese durch die Raddurchfahrt beeinflusst werden.

Unter "rechnergestützt" oder "computerimplementiert" kann im Zusammenhang mit der Erfindung beispielsweise eine Implementierung des Verfahrens verstanden werden, bei dem ein Computer / Prozessor oder mehrere Computer / Prozessoren mindestens einen Verfahrensschritt des Verfahrens ausführt oder ausführen.

Sofern es in der nachfolgenden Beschreibung nicht anders angegeben ist, beziehen sich die Begriffe "erstellen", "berechnen", "rechnen", "feststellen", "generieren", "konfigurieren", "modifizieren" und dergleichen vorzugsweise auf Handlungen und/oder Prozesse und/oder Verarbeitungsschritte, die Daten verändern und/oder erzeugen und/oder die Daten in andere Daten überführen. Dabei liegen die Daten insbesondere als physikalische Größen vor, beispielsweise als elektrische Impulse oder auch als Messwerte. Die erforderlichen Anweisungen/Programmbefehle sind in einem Computerprogramm als Software zusammengefasst. Weiterhin beziehen sich die Begriffe "empfangen" "aussenden", "einlesen", "auslesen", "übertragen" und dergleichen auf das Zusammenwirken einzelner Hardwarekomponenten und/oder Softwarekomponenten über Schnittstellen. Die Schnittstellen können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Der Ausdruck "Computer" ist breit auszulegen, er deckt alle elektronischen Geräte mit Datenverarbeitungseigenschaften ab. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können. Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder eines Datenträgers) verstanden werden.

Unter einem "Prozessor" kann im Zusammenhang mit der Erfindung beispielsweise eine Maschine, zum Beispiel ein Sensor zur Erzeugung von Messwerten oder eine elektronische Schaltung, verstanden werden. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung eines rechnergestützten Verfahrens ausgerüstet ist.

Als "Cloud" soll eine Umgebung für ein "Cloud-Computing" (deutsch Rechnerwolke oder Datenwolke) verstanden werden. Gemeint ist eine IT-Infrastruktur, welche über ein Netzwerk wie das Internet verfügbar gemacht wird. Sie beinhaltet in der Regel Speicherplatz, Rechenleistung oder Anwendungssoftware als Dienstleistung, ohne dass diese auf dem die Cloud nutzenden lokalen Rechner installiert sein müssen. Angebot und Nutzung dieser Dienstleistungen erfolgen dabei ausschließlich durch technische Schnittstellen und Protokolle, etwa mittels eines Webbrowsers. Die Spannweite der im Rahmen des Cloud-Computings angebotenen Dienstleistungen umfasst das gesamte Spektrum der Informationstechnik und beinhaltet unter anderem Infrastruktur, Plattformen und Software.

Als "Programmmodule" sollen einzelne Funktionseinheiten verstanden werden, die den erfindungsgemäßen Programmablauf ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Die Messsignale von der Messspule und Empfangssignale von der Empfangsspule werden vorzugsweise synchron zur Sendefrequenz gleichgerichtet. Dies hat den Vorteil, dass eine gemeinsame Verarbeitung des Empfangssignals und des Messsignals vereinfacht wird. Diese können insbesondere zum Zweck der Eliminierung des Störeinflusses direkt miteinander verglichen sowie zueinander addiert bzw. voneinander subtrahiert werden (hierzu im Folgenden noch mehr).

Die vorzugsweise (vorher) gleichgerichtete Empfangsspannung und die Messspannung durchlaufen zur Unterdrückung des Nutzfrequenzbandes erfindungsgemäß einen Hochpassfilter, der so dimensioniert ist, dass jene Frequenzen, die durch Radüberfahrten erzeugt werden können, vorteilhaft unterdrückt werden. Die Signalveränderung der Radüberfahrt wird also unterdrückt. Gleichzeitig werden damit auch Störsignale nahe der Arbeitsfrequenz, die das Nutzfrequenzband bestimmt (vorzugsweise mittig im Nutzfrequenzband liegt), unterdrückt. Eine Hochpassfilterung stellt somit vorteilhaft eine einfache Möglichkeit dar, das Nutzfrequenzband zu unterdrücken. Dass hierbei auch ein Teil der Störsignale nahe der Arbeitsfrequenz unterdrückt wird, kann hingenommen werden, da für eine Angleichung von Empfangssignal und Messsignal außerhalb des Nutzfrequenzbandes genügend Störeinflüsse im Messsignal und im Empfangssignal zur Verfügung stehen.

Die dynamische Störfeldkompensation basiert darauf, dass die störenden Schienenströme und andere Störquellen normalerweise breitbandig, z.B. durch Funkenabriss, erzeugt werden. Neben der Störfrequenz genau auf Arbeitsfrequenz des Senders werden also in den benachbarten Frequenzbereichen ebenfalls Spannungen durch Schienenströme in die Spulen induziert. Die beiden Signalverarbeitungswege des Empfangssignals und des Messsignals haben zumindest gleiche Frequenzanteile, vorzugsweise einen zumindest weitgehend gleichen Frequenzgang.

In dem einen Signalpfad (Signalanpassungspfad) werden die Radsignalanteile als im Empfangssignal der Empfangsspule und (soweit vorhanden) im Messsignal der Messspule vorzugsweise durch einen nachgeschalteten Hochpassfilter unterdrückt und so ein modifiziertes Messsignal und ein modifiziertes Empfangssignal erzeugt. Die am Ende anstehenden Störsignalpegel werden miteinander verglichen. Das Verhältnis dieser Störspannungen dient der Nachführung der Signalverstärkung des Messignals (alternativ kann die Angleichung auch anders erfolgen, z. B. durch Verstärkung des Empfangssignals).

In einem anderen Signalpfad (Signalverarbeitungspfad) ist der Hochpassfilter nicht enthalten. Radsignale werden somit nicht unterdrückt. Der durch das Störspannungsverhältnis angepasste Signalpegel der Messspule wird vom eigentlichen Empfangssignal eliminiert, vorzugsweise, indem es subtrahiert wird. So erhält man das von Störeinflüssen (durch Messsignal ermittelt) bereinigte Radsignal aus dem Empfangssignal.

In der Messspule wird durch deren Geometrie und Ausrichtung möglichst kein Radsignal erzeugt. Als Radsignal soll dabei ein Signalanteil verstanden werden, der durch den Einfluss eines passierenden Rades induziert wird. Das bedeutet im Sinne der Erfindung, dass Störsignale, die nicht vom nachfolgenden Hochpassfilter unterdrückt werden und dennoch innerhalb der Eingangsbandbreite des Empfangsschwingkreises liegen, einen Signalpegel erzeugen, der der Störgröße entspricht. Je nach Ausformung und Position der Spulen sind diese Pegel unterschiedlich hoch. Das Verhältnis der Störpegel zwischen Empfangsspule und Messspule ist aber konstant für den nutzbaren Frequenzbereich, also den Durchlassbereich. Dies bedeutet, aus diesem Verhältnis kann errechnet werden, mit welchem Verstärkungsfaktor (größer, gleich oder kleiner 1) das eigentliche Kompensationssignal der Messspule verändert werden muss, um so das durch das Angleichen von Empfangssignal und Messsignal erhaltene angeglichene Störsignal im Empfangssignal zu kompensieren. Eine möglichst vollständige Kompensation wird bei gleich großen Störsignalpegeln erreicht.

Besonders einfach ist es vorteilhaft möglich, dass der Verstärkungsfaktor, wie oben beschrieben, für das Messsignal ermittelt wird. Ein Angleichen kann jedoch auch dadurch erfolgen, dass ein Verstärkungsfaktor allein für das Empfangssignal oder für das Empfangssignal und das Messsignal ermittelt wird. Wichtig ist im Ergebnis lediglich, dass das Empfangssignal und das Messsignal einander angeglichen werden, damit eine Kompensation der Störsignalpegel ermöglicht wird. Unabhängig davon, welches der beiden Signale verändert wird, werden nach Anwendung dieses Vorgangs beide Signale als angeglichene Signale, also angeglichenes Empfangssignal und angeglichenes Messsignal bezeichnet.

Der angepasste Signalpegel der Messspule (angeglichenes Messsignal) wird vom eigentlichen angeglichenen Empfangssignal je nach Phasenlage addiert oder subtrahiert, wobei hierbei im Signalverarbeitungspfad keine Hochpässe vorhanden sind, da das eigentliche Nutzsignal, also das Radsignal, verarbeitet werden soll. Da es sich bei den Störsignalen auch um vereinzelte kurze Störimpulse handeln kann, ist eine Signalvorverarbeitung in Form einer zeitlichen Dehnung dieser Impulse z. B. in Form eines Haltegliedes (S&H-Gliedes), eine Spitzenwertabtastung oder auch Mittelwertbildung der Störsignale sinnvoll, je nach Verarbeitungsgeschwindigkeit und Verarbeitungsart, z. B. digital oder analog.

Die genannte Aufgabe wird alternativ mit dem eingangs angegebenen Anspruchsgegenstand (Raddetektor) erfindungsgemäß auch dadurch gelöst, dass die Verarbeitungseinheit eingerichtet ist, rechnergestützt,

- ein modifiziertes Empfangssignal und ein modifiziertes Messsignal zu generieren, bei denen innerhalb der gemessenen Bandbreite des Empfangssignals und des Messsignals ein Nutzfrequenzband, in dem das Empfangssignal liegt, unterdrückt ist,
- die Signalstärke des modifizierten Empfangssignals und des modifizierten Messsignals einander anzugleichen,
- den Störeinfluss in dem angeglichenen Empfangssignal durch Berücksichtigung des angeglichenen Messsignals zu beseitigen oder zumindest zu verringern.

Die mit dem Raddetektor bzw. dessen Einsatz verbundenen Vorteile sind im Rahmen der Erläuterung des obenstehenden Verfahrens bereits genannt worden und sollen an dieser Stelle nicht noch einmal wiederholt werden.

Beide Spulen, die Messspule und die Empfangsspule, sind vorzugsweise als breitbandige Schwingkreise mit dem gleichen Frequenzgang ausgeführt. Beispielsweise könnte dies durch gedämpfte Schwingkreise erreicht werden. Diese Eingangssignalbandbreite ist größer als jene, die vom eigentlichen Nutzsignal, also der Radüberfahrt, benötigt wird.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird.

Insbesondere kann ein Raddetektor mit einer Verarbeitungseinheit ausgestattet sein, wobei die Verarbeitungseinheit eine Bereitstellungsvorrichtung aufweist, die das erwähnte Computerprogrammprodukt speichert und/oder bereitstellt. In diesem Fall ist es möglich, das erfindungsgemäße Verfahren ganz oder teilweise durch einen Computer ausführen zu lassen, wobei die einzelnen Funktionsmodule für das Verfahren ganz oder teilweise durch Software digital und nicht durch Hardwarekomponenten analog realisiert sind. Modifikationen des Verfahrens sind vorteilhaft dadurch leichter möglich. Dadurch kann das Verfahren beispielsweise mit unterschiedlichen Parametern für unterschiedliche Raddetektoren zum Einsatz kommen, ohne dass modifizierte Hardwarekomponenten bereitgestellt werden müssen.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In:

Fig. 1 ist der grundsätzliche Signal-Spannungsverlauf Ue über der Frequenz f eines gedämpften Schwingkreises von Empfangsspule und Messspule in einem Koordinatensystem dargestellt,

Fig. 2 sind zur Verdeutlichung impulsartige Störsignale in einem Diagramm entsprechend Fig. 1 dargestellt,

Fig. 3 ist die mögliche Signalverarbeitung in einem Ausführungsbeispiel des erfindungsgemäßen Verfahrens als Flussdiagramm mit Funktionselementen in der Art eines Blockschaltbildes dargestellt, wobei die Blöcke analoge Funktionsbausteine oder Programmmodule eines Ausführungsbeispiels des erfindungsgemäßen Computerprogramms repräsentieren können,

Fig. 4 ist eine Spulenposition an der Schiene mit überfahrendem Rad schematisch in einem Ausführungsbeispiel des erfindungsgemäßen Raddetektors im Schnitt dargestellt,

Fig. 5 ist eine Sicht von der Seite auf ein Ausführungsbeispiel des erfindungsgemäßen Raddetektors dargestellt.

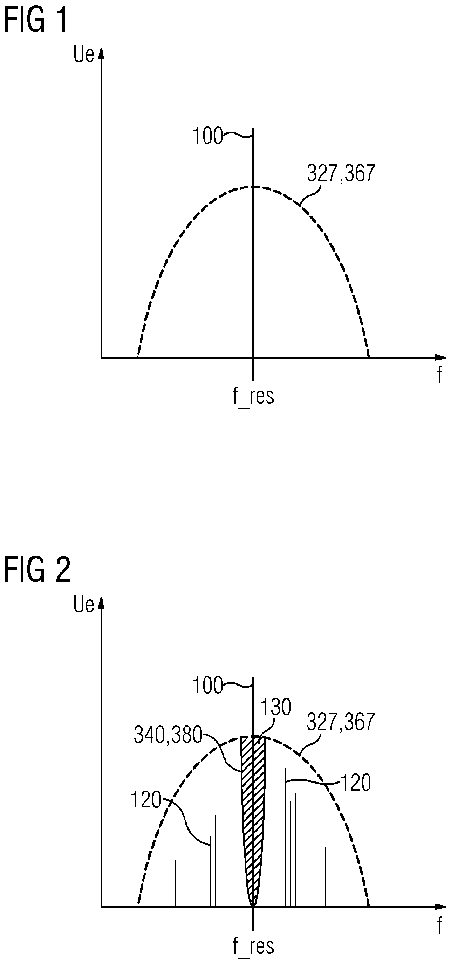

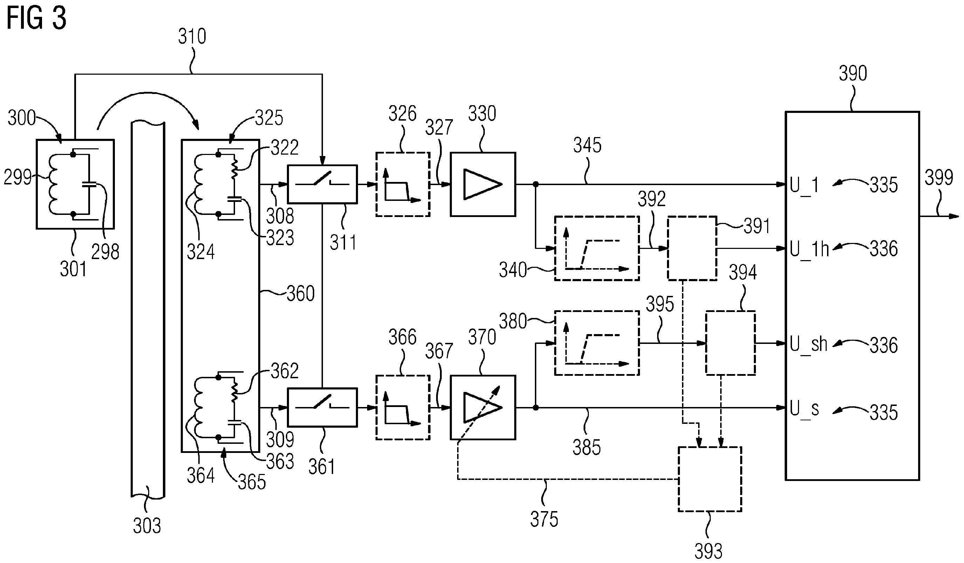

In Fig. 1 ist der grundsätzliche Signalspannungsverlauf Ue über die Frequenz f eines gedämpften Schwingkreises 325 mit Empfangsspule und eines gedämpften Schwingkreises 365 mit Messspule dargestellt (vgl. auch Fig. 3). Um die Arbeitsfrequenz f_res 100 herum ist bei synchroner Gleichrichtung ein weitgehend symmetrischer Empfangsbereich 327, 367 mit abnehmender Empfindlichkeit in Abhängigkeit vom Abstand der betreffenden Frequenz f von der Arbeitsfrequenz f_res vorhanden.

In Fig. 2 sind des Weiteren zur Verdeutlichung beispielhaft Störsignale 120 dargestellt. Das Verhältnis der Störspannungspegel von Empfangsspule und Messspule zueinander ist im Empfangsbereich 327, 367 der Eingangsfrequenzen der gedämpften Schwingkreise 325, 365, (vergleiche Fig. 3), in die die Empfangsspule und die Messspule eingebaut sind, konstant. Von der Betrachtung der Störgrößen ausgenommen ist nur der von einem Hochpassfilter 340, 380 ausgesparte Bereich 130. Hier würde die Radüberfahrt das Signalverhältnis verfälschen, da sie in der Empfangsspule einen Signalpegel erzeugt, in der Messspule aber nicht.

In Fig. 3 ist eine mögliche Signalverarbeitung dargestellt. Gegenüberliegend an einer Schiene 303 befinden sich ein Senderschwingkreis 300, aufweisend die Sendespule 299 und einen Kondensator 298, in einem Gehäuse 301 und ein gedämpfter Empfangsschwingkreis 325, aufweisend die Empfangsspule 324, einen Kondensator 323 und einen Dämpfungswiderstand 322 zur Erzeugung eines Empfangssignals 308, zusammen mit dem Messschwingkreis 365, aufweisend die Empfangsspule 364, einen Kondensator 363 und einen Dämpfungswiderstand 362 zur Erzeugung eines Messsignals 309. Die beiden letztgenannten Schwingkreise sind hier wegen der räumlichen Nähe in einem gemeinsamen Gehäuse 360 untergebracht.

Über eine Sendefrequenz 310 wird die Synchrongleichrichtung durch Synchrongleichrichter 311, 361 gesteuert. Die optionalen Tiefpassfilter 326, 366 dienen der Angleichung der Dämpfungskurven, also der Empfangsbereiche, wenn z. B. die Frequenzbereiche von Empfangsschwingkreis 325 und Messschwingkreis 365 auf Grund der unterschiedlichen Spulen nicht genau übereinstimmen.

Beide Signalpegel 327, 367 werden durch Verstärker 330, 370 verstärkt, wobei der Signalpegel des Messsignals variabel (gesteuert über Rückkopplung 375) verstärkt werden kann. Hierdurch ist eine Angleichung der beide Signalpegel (und damit des Messignals und des Empfangssignals) möglich. Die verstärkten Signale, also das angeglichene Empfangssignal 345 und das angeglichene Messsignal 385, werden einmal direkt zu einer weiterverarbeitenden Einheit als U_1 (Empfangsspannung) und U_s (Messspannung) geführt, also z.B. zu einen Mikrocontroller 390. Gleichzeitig werden die beiden Signale auch über Hochpassfilter 340, 380 geführt und erreichen als U_1h (gefilterte Empfangsspannung) 392 und U_sh (gefilterte Messspannung) 395 den Mikrocontroller. Diese stellen ein Maß für die Störspannungen dar.

Aus dem Verhältnis U_1h/U_sh, also dem Verhältnis der Störspannungen, ergibt sich der Verstärkungsfaktor als Rückkopplung 375. Es wird verstärkt oder auch reduziert, sodass die Störgrößen möglichst gleich sind:

$$U\_1h = U\_sh.$$

Mit diesen angeglichenen Störgrößen wird das Signal U_s vom Empfangssignal U_1 subtrahiert oder auch addiert, je nach Spulenausrichtung und Phasenlage.

Die beiden optionalen Signalverarbeitungseinheiten 391, 394 stellen hier die oben erwähnten Signalvorverarbeitungen, wie z. B. S&H-Glieder dar, die wiederum in einen Hardware-Addierer/Subtrahierer 393 geleitet werden, der den Verstärkungsfaktor als Rückkopplung 375 zum variablen Verstärker 370 direkt einstellt.

Als Ausgangssignal 399 der kompletten Signalverarbeitung steht, wie allgemein üblich, ein analoges oder digitales Radsignal zur Weiterverarbeitung zur Verfügung. Prinzipiell ist es auch möglich, die gesamte Signalverarbeitung in einen Computer oder Mikrocontroller zu verlegen. Die oben aufgezeigten Einheiten würden dann als Hardware entfallen und im Computer oder Mikrocontroller nachgebildet werden. Insbesondere die Komponenten 311, 361, 326, 366, 330, 370, 340, 380, 391, 394, 393 und 390 sind dann durch geeignete Programmmodule verwirklicht. Der in Fig. 3 dargestellte Signalweg dient für dieses Ausführungsbeispiels diesbezüglich nur der Verdeutlichung der Programmstruktur.

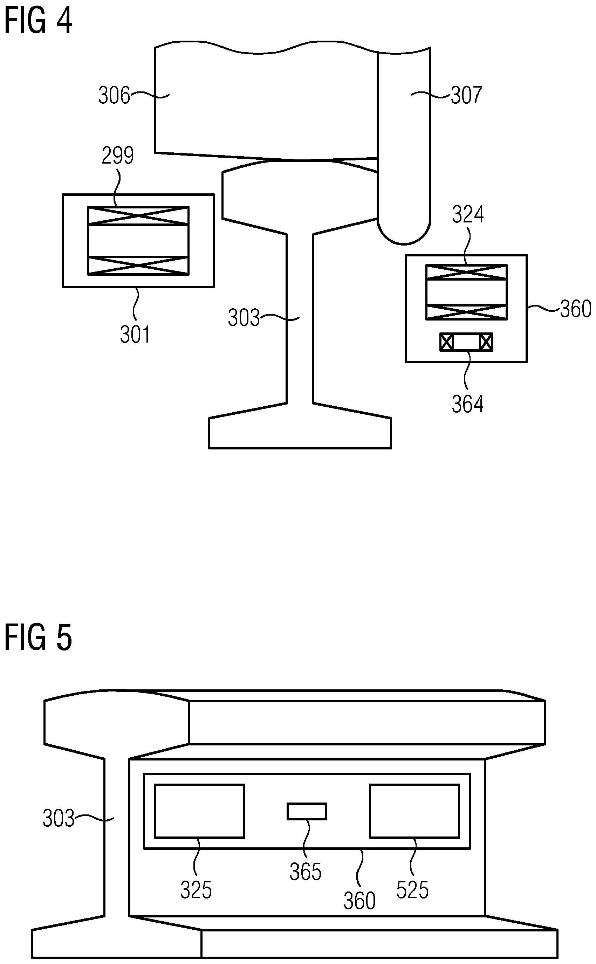

In Fig. 4 ist eine Spulenposition an der Schiene 303 mit überfahrendem Rad 306 und Spurkranz 307 dargestellt. Die Sendespule 299 (der zugehörige Schwingkreis 300 ist der Übersichtlichkeit halber nicht dargestellt: vergleiche Fig. 3) ist in einem Gehäuse 301 untergebracht. Die Ausrichtung der Empfangsspule 324 (der zugehörige Schwingkreis 325 ist hier in der Übersichtlichkeit halber nicht dargestellt) ist hier z.B. näherungsweise horizontal, sodass konzentrische, magnetische Feldlinien, die von Schienenstrom erzeugt werden, nur geringe Störspannungspegel induzieren. In der Nähe der Empfangsspule 324 befindet sich die Messspule 365 (der zugehörige Schwingkreis 365 ist hier in der Übersichtlichkeit halber nicht dargestellt) in einem Gehäuse 360. Die Position ist hier nur zur Verdeutlichung unterhalb der Empfangsspule angeordnet und kann auch auf gleicher Höhe angeordnet sein. Auch kann die Messspule aus der Horizontallage gekippt sein (vorzugsweise um 90° derart, dass eine vertikale Ausrichtung entsteht), um den Signaleinfluss bei Radüberfahrt zu reduzieren und die der Störeinflüsse zu erhöhen.

In Fig. 5 ist eine Sicht von der Seite auf den Sensor dargestellt. Die Ausführung ist diesmal zweikanalig, d. h. neben der einen Empfangsspule 324 befindet sich eine zweite Empfangsspule 525 im Gehäuse 360. Zweikanalige Sensoren dienen der Fahrtrichtungserkennung und sind hinlänglich bekannt. Dazwischen ist die Messspule 365 angeordnet. Prinzipiell kann eine Messspule zur Störfeldkompensation mehrerer Empfangsspulen verwendet werden. Hier würde also eine Messspule für beide Empfangssignale verwendet werden. Allerdings kann auch jede Empfangsspule mit einer eigenen Messspule ausgestattet werden.

Bezugszeichenliste

| | |
|---|---|
| 100 | Arbeitsfrequenz f_res |
| 120 | impulsartige Störsignale |
| 130 | ausgesparter Bereich |
| 298 | Kondensator |
| 299 | Sendespule |
| 300 | Senderschwingkreis |
| 301 | Gehäuse |
| 303 | Schiene |
| 306 | Rad |
| 307 | Spurkranz |
| 308 | Empfangssignal |
| 309 | Messsignal |
| 310 | Sendefrequenz |
| 311, 361 | Synchrongleichrichter |
| 324 | Empfangsspule |
| 322 | Dämpfungswiderstand |
| 325 | Empfangsschwingkreis |
| 326, 366 | Tiefpassfilter |
| 327, 367 | Signalpegel |
| 327, 367 | symmetrischer Empfangsbereich |
| 330, 370 | Verstärker |
| 335 | Signalanpassungspfad |
| 336 | Signalverarbeitungspfad |
| 340, 380 | Hochpassfilter |
| 345 | angeglichenes Empfangssignal |
| 360 | Gehäuse |
| 362 | Dampfungswiderstand |
| 364 | Messspule |

| 365 | Messschwingkreis |
| 375 | Rückkopplung |
| 385 | angeglichenes Messsignal |
| 390 | Mikrocontroller |
| 391, 394 | Signalverarbeitungseinheiten |
| 392 | modifiziertes Empfangssignal |
| 395 | modifizierte Messsignal |
| 393 | Hardware-Addierer/Subtrahierer |
| 399 | Ausgangssignal |
| 525 | zweite Empfangsspule |

**Patentansprüche**

1. Verfahren zum Detektieren eines schienengebundenen Rades (306), bei dem

   • in einer induktiven schienenumgreifend montierten Sensoranordnung mit einer Sendespule (299) und einer Empfangsspule (324) ein einen Radeinfluss repräsentierendes Empfangssignal (308) generiert wird,
   • mit einer Messspule (364) ein einen Störeinfluss repräsentierendes Messsignal (309) generiert wird,
   • das Empfangssignal (308) und das Messsignal (309) verarbeitet werden,

   wobei die Verarbeitung rechnergestützt erfolgt, indem

   • ein modifiziertes Empfangssignal (392) und ein modifiziertes Messignal (395) generiert werden, bei denen innerhalb der gemessenen Bandbreite des Empfangssignals und des Messsignals ein Nutzfrequenzband, in dem das Empfangssignal liegt, unterdrückt ist,
   • die Signalstärke des modifizierten Empfangssignals (392) und des modifizierten Messsignals (395) einander angeglichen werden,
   • der Störeinfluss in dem angeglichenen Empfangssignal (345) durch Berücksichtigung des angeglichenen Messsignals (385) beseitigt oder zumindest verringert wird,

   **dadurch gekennzeichnet,**

   • **dass** das Empfangssignal (308) und das Messsignal (309) zur Unterdrückung des Nutzfrequenzbandes in einem Signalanpassungspfad (336) je einen Hochpassfilter (340, 380) durchlaufen, der so dimensioniert ist, dass jene Frequenzen, die durch einen Radeinfluss erzeugt werden können, unterdrückt werden.

2. Verfahren nach Anspruch 1,

**dadurch gekennzeichnet,**
**dass** das Messsignal (309) von der Messspule (364) und das Empfangssignal (308) von der Empfangsspule (324) synchron zur Sendefrequenz der Sendespule (299) gleichgerichtet werden.

3. Verfahren nach Anspruch 2,
**dadurch gekennzeichnet,**
**dass** der Störeinfluss in einem Signalanpassungspfad (335), der parallel zum Signalverarbeitungspfad (336) verläuft, beseitigt oder zumindest verringert wird.

4. Verfahren nach Anspruch 3,
**dadurch gekennzeichnet,**
**dass** das angeglichene Messignal (385) vom angeglichenen Empfangssignal (345) je nach Phasenverschiebung addiert oder subtrahiert, insbesondere im Falle einer vorherigen Gleichrichtung gemäß Anspruch 2 subtrahiert wird.

5. Verfahren nach einem der voranstehenden Ansprüche,
**dadurch gekennzeichnet,**
**dass** eine Signalvorverarbeitung des Messsignals (309) und des Empfangssignals (308) in Form einer zeitlichen Dehnung der durch den Störeinfluss entstandenen Impulse, insbesondere in Form einer Verwendung eines Haltegliedes und/oder eine Spitzenwertabtastung und/oder eine Mittelwertbildung der Messsignale, erfolgt.

6. Verfahren nach einem der voranstehenden Ansprüche,
**dadurch gekennzeichnet,**
**dass** die Messspule (364) am Einbauort derart angeregt wird, dass in der Messspule durch einen Radeinfluss ein minimales Radsignal erzeugt wird.

7. Raddetektor, aufweisend

   • eine induktive Sensoranordnung für eine schienenumgreifende Montage mit einer Sendespule (299) und einer Empfangsspule (324) zur Erzeugung eines einen Radeinfluss repräsentierenden Empfangssignals (308),
   • eine Messspule (364) zur Erzeugung eines einen Störeinfluss repräsentierenden Messsignals (309),
   • einer Verarbeitungseinheit für das Empfangssignal (308) und das Messsignal (309),

   wobei die Verarbeitungseinheit eingerichtet ist, rechnergestützt,

   • ein modifiziertes Empfangssignal (392) und ein modifiziertes Messignal (395) zu generieren, bei denen innerhalb der gemessenen Bandbreite des Empfangssignals und des Messsignals ein Nutzfrequenzband, in dem das Empfangssignal liegt, unterdrückt ist,
• die Signalstärke des modifizierten Empfangssignals (392) und des modifizierten Messsignals (395) einander anzugleichen,
• den Störeinfluss in dem angeglichenen Empfangssignal (345) durch Berücksichtigung des angeglichenen Messsignals (385) zu beseitigen oder zumindest zu verringern,

**dadurch gekennzeichnet,**

• **dass** die Verarbeitungseinheit eingerichtet ist, dass das Empfangssignal (308) und das Messsignal (309) zur Unterdrückung des Nutzfrequenzbandes in einem Signalanpassungspfad (336) je einen Hochpassfilter (340, 380) durchlaufen, der so dimensioniert ist, dass jene Frequenzen, die durch einen Radeinfluss erzeugt werden können, unterdrückt werden.

8. Raddetektor nach Anspruch 7,
**dadurch gekennzeichnet,**
**dass** die Messspule und die Empfangsspule als im Vergleich zum Nutzfrequenzband breitbandige Schwingkreise mit dem gleichen Frequenzgang ausgeführt sind.

9. Raddetektor nach einem der Ansprüche 7 oder 8,
**dadurch gekennzeichnet,**
**dass** die Messspule in dem Raddetektor am Einbauort derart ausgerichtet ist, dass in der Messspule durch einen Radeinfluss ein minimales Radsignal erzeugt wird.

10. Computerprogrammprodukt, umfassend Befehle, die bei der Ausführung des Programms durch einen Computer diesen veranlassen, das Verfahren nach einem der Ansprüche 1-6 auszuführen.

11. Bereitstellungsvorrichtung für das Computerprogrammprodukt nach Anspruch 10, wobei die Bereitstellungsvorrichtung das Computerprogrammprodukt speichert und/oder bereitstellt.

12. Raddetektor nach einem der Ansprüche 7 - 9,
**dadurch gekennzeichnet,**
**dass** in der Verarbeitungseinheit eine Bereitstellungsvorrichtung gemäß Anspruch 11 integriert oder mit dieser verbunden ist.

## Claims

1. Method for detecting a rail-bound wheel (306), in which,

• in an inductive sensor arrangement installed in a rail-encompassing manner with a transmit coil (299) and a receive coil (324), a receive signal (308) is generated which represents a wheel influence,
• a measurement signal (309) which represents an interference is generated by a measurement coil (364),
• the receive signal (308) and the measurement signal (309) are processed,
wherein the processing takes place in a computer-assisted manner, in that

• a modified receive signal (392) and a modified measurement signal (395) are generated, in which a useful frequency band, in which the receive signal lies, is suppressed within the measured bandwidth of the receive signal and the measurement signal,
• the signal strengths of the modified receive signal (392) and the modified measurement signal (395) are adjusted to one another,
• the interference in the adjusted receive signal (345) is rectified or at least reduced by taking into consideration the adjusted measurement signal (385),

**characterised in that**

• the receive signal (308) and the measurement signal (309), in order to suppress the useful frequency band in a signal adjustment path (336), each pass through a high-pass filter (340, 380) that is dimensioned such that the frequencies that can be generated by wheel influence are suppressed.

2. Method according to claim 1,
**characterised in that**
the measurement signal (309) of the measurement coil (364) and the receive signal (308) of the receive coil (324) are aligned to be synchronous with the transmit frequency of the transmit coil (299).

3. Method according to claim 2,
**characterised in that**
the interference is rectified or at least reduced in a signal adjustment path (335) that runs in parallel with the signal processing path (336).

4. Method according to claim 3,
**characterised in that**
the adjusted measurement signal (385) is added to or subtracted from the adjusted receive signal (345), depending on the phase shift, in particular is subtracted in the case of previous rectification in accordance with claim 2.

**5.** Method according to one of the preceding claims, **characterised in that**
a signal preprocessing takes place for the measurement signal (309) and the receive signal (308) in the form of a temporal expansion of the pulses arising due to the interference, in particular in the form of using a holding element and/or a peak value sampling and/or an averaging of the measurement signals.

**6.** Method according to one of the preceding claims, **characterised in that**
the measurement coil (364) is excited at the installation site such that a minimum wheel signal is generated in the measurement coil by a wheel influence.

**7.** Wheel detector, having

• an inductive sensor arrangement for installation in a rail-encompassing manner with a transmit coil (299) and a receive coil (324) for generating a receive signal (308) which represents a wheel influence,
• a measurement coil (364) for generating a measurement signal (309) which represents an interference,
• a processing unit for the receive signal (308) and the measurement signal (309),
wherein the processing unit is configured, in a computer-assisted manner,

• to generate a modified receive signal (392) and a modified measurement signal (395), in which a useful frequency band, in which the receive signal lies, is suppressed within the measured bandwidth of the receive signal and the measurement signal,
• to adjust the signal strengths of the modified receive signal (392) and the modified measurement signal (395) to one another,
• to rectify or at least reduce the interference in the adjusted receive signal (345) by taking into consideration the adjusted measurement signal (385),

**characterised in that**

• the processing unit is configured such that the receive signal (308) and the measurement signal (309), in order to suppress the useful frequency band in a signal adjustment path (336), each pass through a high-pass filter (340, 380) that is dimensioned such that the frequencies that can be generated by wheel influence are suppressed.

**8.** Wheel detector according to claim 7, **characterised in that**

the measurement coil and the receive coil are designed as resonant circuits, which are wideband compared to the useful frequency band, with the same frequency response.

**9.** Wheel detector according to one of claims 7 or 8, **characterised in that**
the measurement coil is oriented in the wheel detector at the installation site such that a minimum wheel signal is generated in the measurement coil by a wheel influence.

**10.** Computer program product, comprising commands which, when the program is executed by a computer, prompt said computer to perform the method according to one of claims 1-6.

**11.** Provision apparatus for the computer program product according to claim 10, wherein the provision apparatus stores and/or provides the computer program product.

**12.** Wheel detector according to one of claims 7 - 9, **characterised in that**
a provision apparatus in accordance with claim 11 is integrated in the processing unit or is connected thereto.

**Revendications**

**1.** Procédé de détection d'une roue (306) guidée sur rail, dans lequel

• on crée un signal (308) de réception, représentant une influence de la roue, dans un dispositif capteur inductif monté en enveloppant le rail et ayant une bobine (299) d'émission et une bobine (324) de réception,
• on crée, par une bobine (364) de mesure, un signal (309) de mesure représentant une influence perturbatrice,
• on traite le signal (308) de réception et le signal (309) de mesure,
dans lequel le traitement s'effectue de manière assistée par ordinateur, en

• créant un signal (392) de réception modifié et un signal (395) de mesure modifié, pour lesquels, dans la largeur de bande mesurée du signal de réception et du signal de mesure, on supprime une bande de fréquence utile, dans laquelle se trouve le signal de réception,
• on met au même niveau les intensités du signal (392) de réception modifié et du signal (395) de mesure modifié,
• on élimine, ou du moins on diminue, l'influence perturbatrice dans le signal (345) de réception mis au même niveau, en tenant compte du signal (385) de mesure mis au même niveau,

**caractérisé**

• **en ce que** l'on fait passer le signal (308) de réception et le signal (309) de mesure pour supprimer la bande de fréquence utile dans un chemin (336) d'adaptation du signal respectivement dans un filtre (340, 380) passe haut, qui est dimensionné de manière à supprimer chaque fréquence, qui pourrait être produite par une influence de la roue.

**2.** Procédé suivant la revendication 1, **caractérisé**
**en ce que** l'on redresse le signal (309) de mesure de la bobine (364) de mesure et le signal (308) de réception de la bobine (324) de réception en synchronisme avec la fréquence d'émission de la bobine (299) d'émission.

**3.** Procédé suivant la revendication 3, **caractérisé**
**en ce que** l'on élimine, ou du moins l'on diminue, l'influence perturbatrice dans un chemin (335) d'adaptation du signal, qui s'étend parallèlement au chemin (336) de traitement du signal.

**4.** Procédé suivant la revendication 3, **caractérisé**
**en ce que** l'on additionne ou l'on soustrait, en particulier on soustrait dans le cas d'un redressement précédent suivant la revendication 2, le signal (385) de mesure mis au même niveau du signal (345) de réception mis au même niveau, chacun suivant le déphasage.

**5.** Procédé suivant l'une des revendications précédentes, **caractérisé**
**en ce que** l'on effectue un prétraitement du signal (309) de mesure et du signal (308) de réception sous la forme d'une extension temporelle des impulsions crées par l'influence perturbatrice, en particulier sous la forme d'une utilisation d'un élément d'arrêt et/ou un échantillonnage de valeurs de pointe et/ou une formation de valeur moyenne des signaux de mesure.

**6.** Procédé suivant l'une des revendications précédentes, **caractérisé**
**en ce que** l'on excite la bobine (364) de mesure à l'emplacement de montage, de manière à produire un signal de roue minimum dans la bobine de mesure par une influence de la roue.

**7.** Détecteur de roue, comportant

• un dispositif capteur inductif pour un montage enveloppant un rail comprenant une bobine (299) d'émission et une bobine (324) de réception de production d'un signal (308) de réception représentant une influence de roue,
• une bobine (364) de mesure de production d'un signal (309) de mesure représentant une influence perturbatrice,
• une unité de traitement du signal (308) de réception et du signal (309) de mesure,
dans lequel l'unité de traitement est agencée, en étant assistée par ordinateur, pour

• créer un signal (392) de réception modifié et un signal (395) de mesure modifié, pour lesquels, dans la largeur de bande mesurée du signal de réception et du signal de mesure, une bande de fréquence utile, dans laquelle se trouve le signal de réception, est supprimée,
• mettre au même niveau les intensités du signal (392) de réception modifié et du signal (395) de mesure modifié,
• éliminer, ou du moins diminuer, l'influence perturbatrice dans le signal (345) de réception mis à niveau en tenant compte du signal (385) de mesure mis à niveau,

**caractérisé**

• **en ce que** l'unité de traitement est agencée de manière à ce que le signal (308) de réception et le signal (309) de mesure passent, pour la suppression de la bande de fréquence utile, dans un chemin (336) d'adaptation du signal chacun dans un filtre (340, 380) passe haut, qui est dimensionné de manière à supprimer chaque fréquence, qui peut être produite par une influence de la roue.

**8.** Détecteur de roue suivant la revendication 7, **caractérisé**
**en ce que** la mesure de bobine de mesure et la bobine de réception sont réalisées sous la forme de circuit oscillant à bande large par rapport à la bande de fréquence utile et ayant la même réponse en fréquence.

**9.** Détecteur de roue suivant l'une des revendications 7 ou 8, **caractérisé**
**en ce que** la bobine de mesure est agencée dans le détecteur de roue à l'emplacement de montage

de manière à produire, dans la bobine de mesure, un signal de roue minimum par une influence de la roue.

**10.** Produit de programme d'ordinateur comprenant des instructions qui, lors de la réalisation du programme par un ordinateur, font que celui-ci effectue le procédé suivant l'une des revendications 1 à 6.

**11.** Dispositif de mise à disposition du produit de programme d'ordinateur suivant la revendication 10, dans lequel le dispositif de mise à disposition met en mémoire et/ou met à disposition le produit de programme d'ordinateur.

**12.** Détecteur de roue suivant l'une des revendications 7 - 9, **caractérisé en ce qu'**un dispositif de mise à disposition suivant la revendication 11 est intégré à l'unité de traitement ou est relié à celle-ci.

## FIG 1

## FIG 2

FIG 3

## FIG 4

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007023475 B4